# EUROPEAN PATENT SPECIFICATION

(11) **EP 3 448 093 B1**
(45) Date of publication and mention of the grant of the patent: **07.10.2020**
(21) Application number: 17187415.9
(22) Date of filing: 23.08.2017
(51) Int. Cl.: H04W 52/14, H04W 52/22, H04W 52/28, H04W 52/24, H04W 52/26, H04W 84/12

(54) **SYSTEM AND METHOD FOR PREDICTION OF TRANSMISSION POWER IN A WIRELESS COMMUNICATION SYSTEM**
SYSTEM UND VERFAHREN ZUR VORHERSAGE DER SENDELEISTUNG IN EINEM DRAHTLOSKOMMUNIKATIONSSYSTEM
SYSTÈME ET PROCÉDÉ DE PRÉDICTION DE PUISSANCE DE TRANSMISSION DANS UN SYSTÈME DE COMMUNICATION SANS FIL

(43) Date of publication of application: 27.02.2019
(73) Proprietor: Advanced Digital Broadcast S.A., 1293 Bellevue (CH)
(72) Inventor: Dabrowski, Bartosz, 65-119 Zielona Gora (PL)
(74) Representative: Blonski, Pawel

(56) References cited:
- US-A1- 2007 191 047
- US-A1- 2008 166 973
- US-A1- 2013 176 876

## Description

### TECHNICAL FIELD

The present invention relates to a system and method for prediction of transmission power in a wireless communication system. In particular the present invention relates to wireless communication systems e.g. Wi-Fi or Bluetooth or the like and to such systems that require one or more of the devices to be mobile. In such cases, duration of operation on battery power is a key factor. Hence, optimisation of the use of power is a significant aspect. The present invention aims at reduction of power consumption via adaptive changes of antenna transmission power.

### BACKGROUND OF THE INVENTION

Existing solutions provide various antenna power optimizations, mainly aiming at extending the range or reducing power consumption via switching from omnidirectional antenna to directional multi-antenna systems.

Other solutions comprise reduction of power in a multi-point network without taking into account relative or absolute location but instead ensuring coherence of the entire network by reserving a communication channel. Such approach is found in patent application US 20110059762 A1.

Other solutions aim at monitoring the existing parameters of a mobile device's antenna system. Examples comprise EP 2171873 A1 and EP 1122892 A2. EP 2171873 A1 discloses a method of monitoring the parameters of the device's own antenna in order to keep as close to the maximum limit of antenna power as possible without exceeding that power. EP 1122892 A2 discloses a method of monitoring the parameters of the devices own antenna in order to influence the times between monitoring events and adjustment of antenna power.

US 20080166973 A1 discloses a method for adjusting a radio-frequency coverage map. The method includes receiving calibration data comprising observed received signal strength values at one or more calibration points corresponding to a radio frequency transmitter, and identifying an applicable coverage map, where the coverage map provides, for the radio frequency transmitter, estimated received signal strength values at one or more locations.

US 20130176876 A1 discloses that in order to obtain the transmission power from the RSSI, a transmission power management unit may store a table representing correspondences between RSSI and transmission power, and acquire, from the table, the value of transmission power that corresponds to the received RSSI, or alternatively, may calculate the value of transmission power by using a formula provided for obtaining the transmission power from the RSSI. Then, from the correlation information on the transmission power and the SAR, the transmission power management unit 3 acquires an SAR value that corresponds to the predicted value of the transmission power for the stopped communication.

US 20070191047 A1 discloses a method and apparatus for processing transmit power control (TPC) commands in a wideband CDMA (WCDMA) network based on a sign metric are disclosed and may include calculating a sign metric of a downlink dedicated physical channel (DPCH) based on a plurality of TPC bits received via the downlink DPCH. A value of at least one of the plurality of TPC bits may not be known when the at least one of the plurality of TPC bits is received. The sign metric may specify an error associated with the plurality of TPC bits. Transmit power may be adjusted for a signal transmitted via at least one uplink communication channel based on the calculated sign metric. At least one reliability weight value may be calculated for at least a portion of the received TCP bits, based on the calculated sign metric.

However, more optimizations may be created by monitoring antenna or signal parameters and adopting antenna transmission power according to historical data, the adopting taking place even before the actual change in antenna's parameter occur. The present invention defines a method to achieve this goal.

### SUMMARY AND OBJECTS OF THE PRESENT INVENTION

An object of the present invention is a system and method for prediction of transmission power in a wireless communication system, according to the appended claims.

### BRIEF DESCRIPTION OF THE DRAWINGS

These and other objects of the invention presented herein, are accomplished by providing a system and method for prediction of transmission power in a wireless communication system. Further details and features of the present invention, its nature and various advantages will become more apparent from the following detailed description of the preferred embodiments shown in a drawing, in which:
Fig. 1 depicts an exemplary device implementing the method of the present invention;
Fig. 2 presents a signal strength map;
Fig. 3 presents another exemplary map of strength according to another possible implementation that allows the methods of the present invention to be executed;
Fig. 4 presents the method of adjusting of transmission power using previous data according to the present invention;
Fig. 5 presents the method of adjusting the map of signal strength using a reliability coefficient and respective threshold values; and
Fig. 6 presents a high level overview of the method according to the present invention.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

The present invention relates mainly to wireless communication schemes, which may include Wi-Fi, Bluetooth or the like. The embodiments of the present invention disclosed in this application all depict only two devices in the presented environment. This is mainly done for the clarity of the description. However, it will become apparent to a one skilled in the art that the method may be generalized to three or more devices.

The method disclosed herein comprises two main steps the first step being a creation of a signal map and the second step being a usage of that signal map in order to optimize power consumption.

It is apparent to a skilled person that the first step being the creation of the signal map may be created using another method than the one described in the embodiments of the present invention. This should not be construed as limiting to the present invention in any way. It is the type of data stored by the map that allow its usage by the second step of the method disclosed being the usage of the map.

The present invention is best described by an exemplary embodiment that follows. One exemplary embodiment of the present invention is a method comprising two steps: the first step being a generation of a map of signal strength of a signal and the second step being a use of the generated map of signal strength (the signal strength is a generic term applying to any quantified property of a respective signal) of signal to adjust the device's transmission power. Therefore, a term of a signal properties map may be applied interchangeably.

For the clarity of description and a better illustration of purpose the following description of the following embodiments will assume one stationary device (110, 201) and one mobile device (100) that is typically carried by a user within a given area covered by the map of signal strength. To this end, each cell of such map corresponds to a physical location/area.

A person skilled in the art will appreciate that this is in no way limiting to the present invention and can easily be adopted to other situations e.g. two mobile devices (100) or two stationary devices (110, 201) or more than two devices of any type.

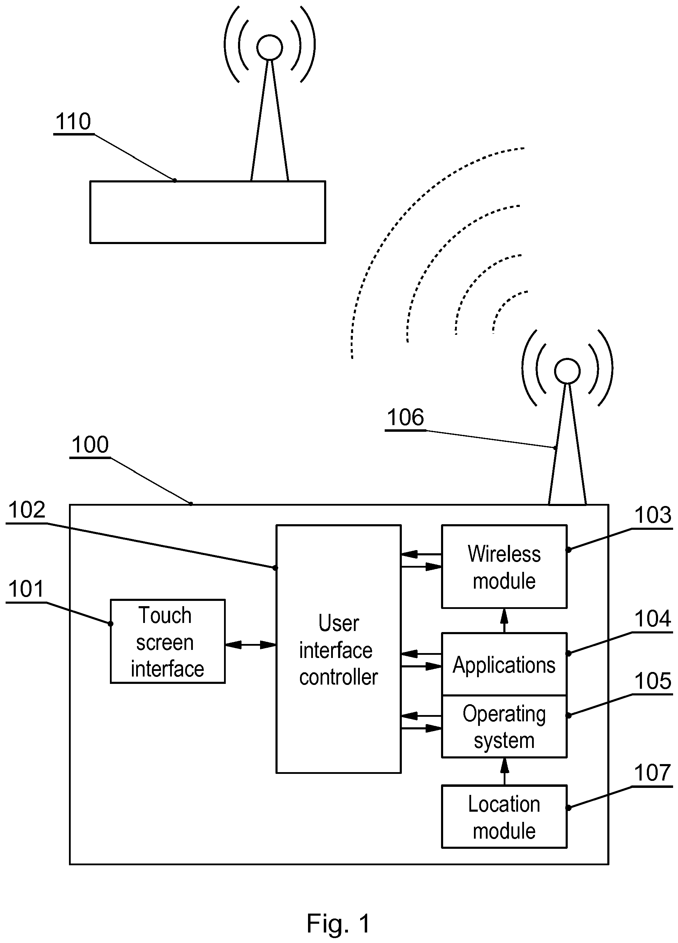

Fig. 1 depicts an exemplary device implementing the method of the present invention. The mobile device (100) may be any device able to communicate via a wireless medium with another device (110) e.g. a smart-phone or a PDA or a portable PC or a Bluetooth headset or the like. Typically, the device comprises some kind of a user interface e.g. a touch interface (101) and a user interface controller (102) managing interaction with the mobile device (100).

Preferably, the mobile device (100) also comprises an operating system (105) and an applications layer (104), which are able to interact with the user interface controller (102) and a wireless module (103). The mobile device (100) is preferably equipped with an antenna (106), which is used to transmit and receive wireless signals to and from a stationary device (110, 201). The mobile device (100) is preferably also equipped with a location detection means or a location module (107) that allows the device to determine its location in space. This module (107) may be a GPS or an accelerometer or the like or may be a module reading location from another external entity including the stationary device (110, 201) or the like.

The system also comprises typical hardware components (not shown) such as a data bus communicatively coupled to a memory. Additionally, other components of the system are communicatively coupled to the system bus so that they may be managed by a controller or microprocessor configured in particular to execute steps of the method according to the present invention.

The memory may store computer program or programs executed by the controller in order to execute steps of the method according to the present invention as well as store one or more maps of signal strength.

The following the description relates to the map of signal strength and the generation thereof.

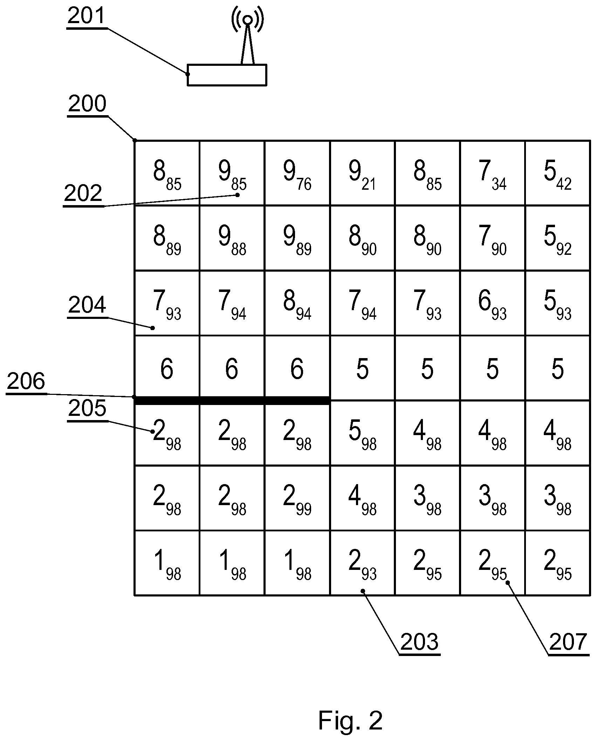

An exemplary embodiment of the map of signal strength, in a form of a rectangular grid cells covering a defined, physical area, is shown in Fig. 2. It is clear that other grid pattern than rectangular may be used as the smallest map areas.

The map of signal strength (200), depicted in Fig. 2, corresponds to the strength of signal of the stationary device (110, 201). The stationary device (201) may be any wireless communication device e.g. a Wi-Fi router or a Bluetooth adapter or the like.

A given mobile device (100) may have access to a plurality of maps of signal strength (200) corresponding to different devices (201). Upon connection to such a device having a corresponding map of signal strength (200), the mobile device (100) may take such map into account during a respective connection.

The map of signal strength (200) comprises quantified values of the strength of a signal of the stationary device (201) ranging from 0 to 9 (or any arbitrarily chosen range of values representing a signal).

For instance, the cell (202) comprises a value of 9, which represents a relatively strong signal, while the cell (203) comprises a value of 2 representing a relatively weak signal (defined for example by Signal to noise ratio). It is apparent, to a person skilled in the art, that the values may actually be selected differently e.g. may be more precise e.g. representing an RSSI value (Received Signal Strength Indication) or a BER (Bit Error Rate) or the like (or a combination thereof) or may be even less precise e.g. in an environment where comparison of the values of strength of signal bears a significant error.

The exemplary map of signal strength (200) also depicts an exemplary rapid change of strength of signal between cells (204) and (205), which may be caused by an obstacle e.g. a wall located as marked by element (206). The map of signal strength (200) also preferably comprises an additional value (207) per cell, which indicates the reliability coefficient of the respective signal.

One embodiment of such a reliability coefficient is a value of probability that the value (signal strength/property value) stored in the respective cell is correct, while another embodiment is an integer value being the higher the higher the reliability coefficient of the signal strength is. This value is used by the methods described later in the present disclosure to modify the map of signal strength and thus keep it adequate.

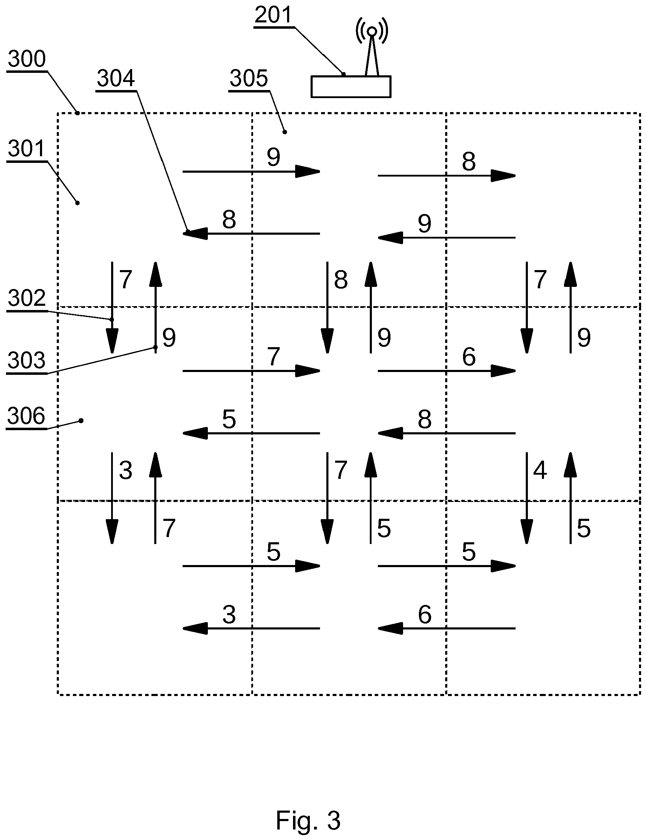

Another exemplary embodiment of the map of signal strength (200) is an extended rectangular grid covering a defined area. Such exemplary grid is shown in Fig. 3. The grid (300) represents the strength of a signal of the same device (201), which may be a Wi-Fi router or a Bluetooth adapter or the like.

Similarly to the previous exemplary embodiment, also this grid (300) comprises quantified values representing the reliability coefficient coupled with each stored value of signal strength. However, the values stored in the cells of the grid (300) of said map are dependent on a direction, from which the particular cell is entered from. For instance the cell (301) is represented by value 8 when entered from the direction (304) of cell (305) and is represented by value 9 when entered from the direction (303) of cell (306).

Similarly, the destination cell (303) will be represented by value of 7 when entered from the direction (302) of the source cell (301). This exemplary embodiment of the map of signal strength aims at including in its definition potential differences in the strength of signal dependent on the direction of movement of a mobile device. Accordingly, in this map of signal strength (200), there is preferably also stored a reliability coefficient associated with each stored value.

Another method of a map of signal strength has been disclosed in an Applicant's co-pending patent application EP15196008.5 entitled "System and method for radio signal coverage mapping". The implementation disclosed therein comprises also means of including the device's orientation in the map of signal strength (200).

The above examples represent maps of signal strength (200) comprising the strength of a signal of a device (201). While this value may be used as a reference in the second step of the present method a better value is the value of strength of signal of the mobile device (100) moving through the map. Of course such value requires the device (201) or some external device to report the value back to the mobile device (100). In such case, the cells of the grid will contain the strength of signal of the mobile device (100) as seen by the stationary device (201). This is a preferred approach.

Other approach may judge the strength or quality or other property of the signal by e.g. the number of retransmissions of data requested by the stationary device (201) e.g. by monitoring of TCP (Transmission Control Protocol) in a TCP/IP based network. The use of this or any other method including or not including the cooperation with device (201) should not be construed as limiting to the present invention in any way.

The second step of the exemplary method of the present invention is the use of the generated map of signal strength in order to adapt transmission power of the mobile device (100).

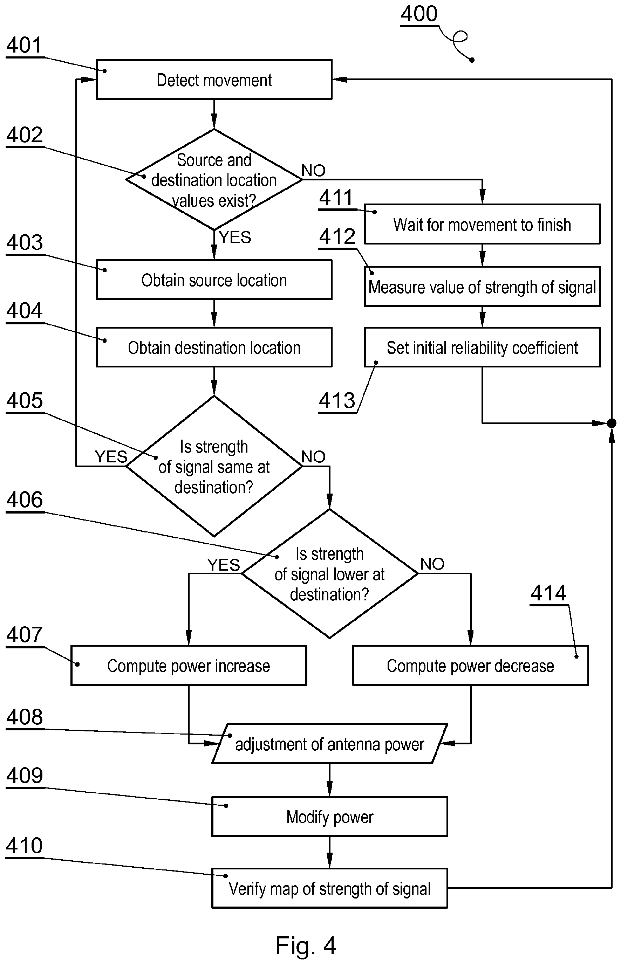

One embodiment of the second step of the present method may be used by a mobile device (100) in conjunction with an exemplary grid (200) map. The method (400) is depicted in Fig. 4. The method (400) has been designed to incorporate verification of the map of signal strength (200). The verification of the map of strength of signal is depicted as step (410) and will be subsequently described in details.

The method (400) begins at step (401) with detection of movement of the mobile device (100), said detection comprising a direction of the movement and an origin cell as well as a destination cell in the grid of a signal strength map (200).

Such definition does not need the movement to be complete at the moment of detection, which allows to react to it faster e.g. half-way through the transition. The location and its aforementioned parameters may be obtained in a variety of ways e.g. by GPS (The Global Positioning System) or using an accelerometer or any approximation of the aforementioned or the like. Such devices are called generically as location detection means.

Next, at step (402) it is verified whether both source at and destination values of the strength of signal exist in a respective map of signal strength (200). If any of those parameters does not exist, the method waits at step (411) for the movement to finish, i.e. the mobile device (100) to arrive at a destination location, and moves to step (412) to measure the value of strength of the signal at the destination location and determine its initial reliability coefficient at step (413).

It will be appreciated that the initial determination of the reliability coefficient strongly depends on the selected implementation or purpose of the creation of the map or the priorities of high level functionality inherent to the mobile device (100) or the like.

In one embodiment the reliability coefficient may be equal to 1 to indicate a probability of a certain measurement, while in another embodiment the reliability coefficient may depend on the measured value to compensate for non-constant error of power measurement.

If at step (402), both the source value and the destination value exist, the method obtains the source value at step (403) and obtains the destination value at step (404).

Next it is verified at step (405) whether the value at destination location is same as at source location. If it is, then no power adjustment is needed and the method moves to step (401) to detect further movement.

Otherwise, the method checks at step (406) whether the value of strength of signal at the destination cell is higher or lower then at the source cell. If the said value is lower, then at step (407) antenna power increase is computed. If at step (406) the said value is higher, then at step (414) power decrease is computed. The result of any and each of the steps (407, 414) is called an adjustment value of antenna power hereinafter (408).

The actual value of the adjustment (408) depends on the selected implementation of strength map and the reliability coefficient. In one embodiment the antenna power may be increased proportionally to the increase in the signal strength predieted at step (405). In another embodiment this value may further be corrected by the reliability coefficient e.g. by reducing the adjustment value proportionally to the value of the reliability coefficient.

Next, at step (409) the power of transmission is modified according to the adjustment value (408). Subsequently, at step (410) the map of strength is verified i.e. it is checked if modifications are needed based on present situation. This step will be described in more detail later on. Finally, the method moves back to step (401) to detect further movement.

It will be appreciated that the definition of equal, higher and lower used at steps (405) and (406) may in fact be implemented using a threshold i.e. equal meaning not higher and not lower then a particular threshold value, higher meaning higher by at least the threshold value and lower meaning lower by at least the threshold value. A skilled person will also appreciate that other similar definitions may be used without limiting the present invention in any way.

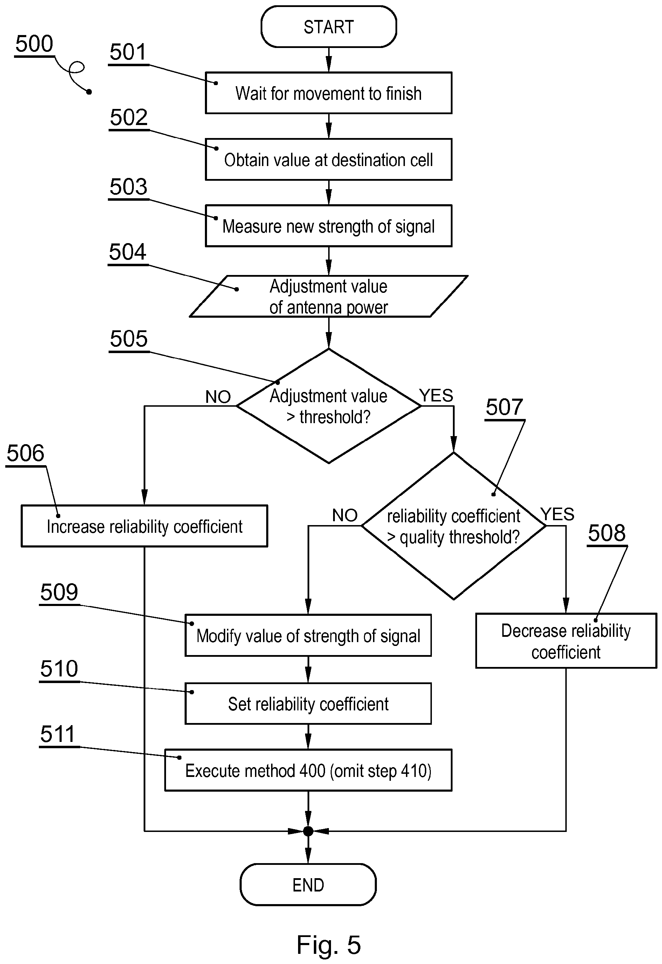

The verification of the map of signal strength of step (410) is done according to a method (500) of Fig. 5. First, at step (501) the method waits for a movement, of a mobile device (100), to finish i.e. arrive at a destination location. Next, the value at a destination cell is obtained at step (502) and a new strength of signal is measured at step (503) producing the adjustment value of antenna power (504).

Subsequently, at step (505) it is checked whether the adjustment value is higher then a threshold, the threshold being a predefined value dependent on the definition of the reliability coefficient that defines two values of strength of signal as substantially different. For example, said threshold may be set at 5% in order to decrease a number of small adjustments to antenna power and react only to larger changes present in said map. In other words said threshold acts as a filter of changes of smaller magnitude.

If the adjustment value (504) does not indicate the two values as substantially different, the method moves to step (506) to increase the reliability coefficient to reinforce its meaning. Subsequently, the method ends.

If at step (505) the adjustment value (504) is higher then the threshold, the method moves to step (507) to check if the reliability coefficient is higher then a quality threshold, the quality threshold being a value from the domain of the reliability coefficient that allows the particular strength of signal to be considered substantially certain.

If the reliability coefficient is higher than the quality threshold, the method decreases the reliability coefficient at step (508) and ends.

In case at step (507), the reliability coefficient is not higher than the quality threshold, the method moves to step (509) and modifies the existing strength of signal at the destination location.

The modification may comprise substitution of the existing value for a newly measured one or computing a mean value or the like.

Next at step (510), the method sets the reliability coefficient similarly to step (413) of the method (400). At step (511), the method (400) is executed again this time omitting step (410) (which initiated the execution of method (500)). This allows the device (100) to adjust the transition power according to method (400).

It will become apparent to a skilled person that the methods (400) and (500) are written do conform to and use the map of signal strength of implementation (200) according to Fig. 2.

It will also become apparent that the methods (400, 500) may easily be adopted to a map of signal strength implementation (300) according to Fig. 3 by simply substituting the destination location or cell for the value of the respective transition e.g. (304) to the destination location that starts at source location.

A skilled person will also appreciate that the methods (400) and (500) may easily be adopted to a variety of other implementations of the map of strength without departing from the broader scope of the present invention.

A reference is also made here indicating that the reliability coefficient and its changes may be determined using a variety of methods as already mentioned before. An exemplary extension of the simple provided examples of the reliability coefficient and its modification may be created using the patent application EP14198454.2 to allow to make the reliability coefficient dependent on the frequency, with which it is being accessed to e.g. promote the locations or directions frequently preferred by the user of the device (100). This should not be construed as limiting to the present invention.

It is also possible to extend the method of creation of the map of strength by application of the 'method for learning of a resource management system using quantified groups of properties' disclosed in a patent application EP14198465.8. This should not be construed as limiting to the present invention.

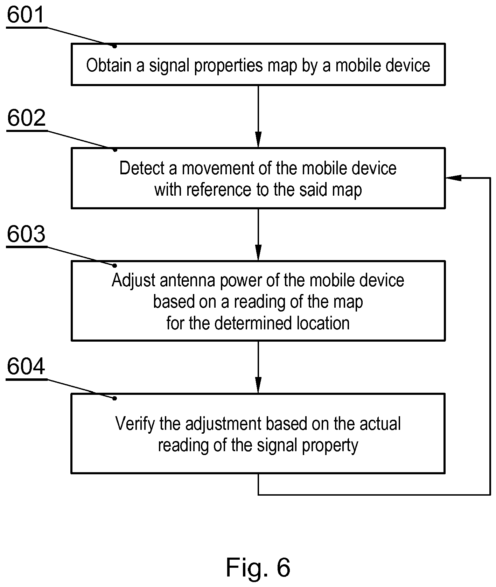

Fig. 6 presents a high level overview of the method according to the present invention. The method starts at step (601) from obtaining a signal properties map (map of signal strength) by a mobile device (100), the map being predefined with reference to a source device (e.g. a stationary device (110)) wherein the map comprises a comparable value denoting at least one signal property and a comparable value denoting a reliability coefficient of the corresponding signal property.

Subsequently, at step (602) there is executed detecting of a movement of the mobile device (100) with reference to the said map and an associated source and destination location. This is typically executed by a location module internal to the mobile device (100).

Next, at step (603), there is executed adjusting antenna power of the mobile device based on a reading of the map (reliability coefficient and signal strength parameters) for the destination location determined in step (602).

Further, at step (604), the method verifies the adjustment based on the actual reading of the signal property. This is effected by adjusting said reliability coefficient related to said destination on said signal properties map. Such adjustment depends strongly on the selected implementation of the reliability coefficient. In one embodiment the reliability coefficient may be increased or decreased by a constant value. In another embodiment the reliability coefficient change may be further corrected to be the higher the higher the change in the signal strength is. Lastly, the method returns to step (602).

By means of the present invention a user may also be directed to locations where required antenna power will be the lowest i.e. the battery usage of a mobile device will be the lowest due to required antenna power. Since the mobile device is in possession of a suitable signal strength map it may direct a user to a preferred location.

The present invention allows to adjust the transition power of a wireless antenna based on the previous knowledge of the behaviour of signal's parameters before the actual condition that may trigger the change occurs. This in turn reduces the negative impact of e.g. increasing the transmission power too late i.e. only after the actual condition occurs. Further, the present method allows to decrease transmission power and thus reduce power consumption of a mobile device. Therefore, the invention provides a useful, concrete and tangible result.

The present invention is applicable in communication between two devices using a wireless link wherein at least one of the devices is mobile. The invention affects antenna power and thus the machine or transformation test is fulfilled and the idea is not abstract.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for prediction of transmission power in a wireless communication system may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for prediction of antenna transmission power in a wireless communication system, the method comprising the steps of
• obtaining (601) a signal properties map by a mobile device (100), the map being predefined with reference to a source device (110), wherein the map comprises, for each cell (202, 203), a comparable value denoting at least one signal property and a comparable value denoting a reliability coefficient (207) coupled with each, corresponding signal property;
• detecting (602) a movement of the mobile device (100) with reference to the said map and an associated source and destination location;
• adjusting (603) antenna transmission power of the mobile device (100), based on a reading, from the signal properties map, the associated reliability coefficient and signal properties for the destination;
• verifying (604) the adjustment based on the actual reading of the signal property and as a result of said verification, adjusting said reliability coefficient related to a cell (202, 203) corresponding to said destination on said signal properties map.

2. The method according to claim 1 wherein said comparable value denoting at least one signal property is at least one of Received Signal Strength Indication or Bit Error Rate or signal strength.

3. The method according to claim 1 wherein said reliability coefficient (207) is a value of probability that the respective comparable value denoting at least one signal property, stored in the respective cell is correct.

4. The method according to claim 1 wherein said comparable value denoting at least one signal property is dependent on a direction, from which the particular cell of said map is entered from.

5. The method according to claim 1 wherein said adjusting step takes into account a threshold operating as a filter of adjustments.

6. The method according to claim 1 wherein the initial reliability coefficient is a fixed value or is dependent on the measured strength of signal reported back to the mobile device (100).

7. A computer program comprising program code means for performing all the steps of the computer-implemented method according to claim 1 when said program is run on a computer.

8. A computer readable medium storing computer-executable instructions performing all the steps of the computer-implemented method according to claim 1 when executed on a computer.

9. An apparatus for prediction of antenna transmission power in a wireless communication system, said apparatus comprising:
• an antenna (106);
• a location detection means (107);
• a memory configured to store one or more signal properties maps;
• a controller configured to execute steps of the method according to claim 1.

## Patentansprüche

1. Verfahren zur Vorhersage der Antennensendeleistung in einem drahtlosen Kommunikationssystem, wobei das Verfahren die folgenden Schritte umfasst:
• Erhalten (601) einer Signaleigenschaftskarte durch ein Mobilgerät (100), wobei die Karte in Bezug auf eine Quellvorrichtung (110) vordefiniert ist, wobei die Karte für jede Zelle (202, 203) einen Vergleichswert umfasst, der mindestens eine Signaleigenschaft bezeichnet, und einen Vergleichswert, der einen Zuverlässigkeitskoeffizienten (207) bezeichnet, gekoppelt mit jeder entsprechenden Signaleigenschaft;
• Erkennen (602) einer Bewegung des Mobilgeräts (100) in Bezug auf die Karte und eine zugeordnete Ausgangs- und Zielposition;
• Anpassen (603) der Antennensendeleistung des Mobilgeräts (100) auf der Basis eines erhaltenen Wertes aus der Signaleigenschaftskarte des zugeordneten Zuverlässigkeitskoeffizienten und der Signaleigenschaften für das Ziel;
• Verifizieren (604) der Anpassung auf der Basis des tatsächlichen Wertes der Signaleigenschaft, und als Folge der Verifizierung, Anpassen des Zuverlässigkeitskoeffizienten in Bezug auf eine Zelle (202, 203) entsprechend dem Ziel auf der Signaleigenschaftskarte.

2. Verfahren nach Anspruch 1, wobei der Vergleichswert, der mindestens eine Signaleigenschaft bezeichnet, mindestens eines der folgenden ist: ein Indikator für die Empfangssignalstärke oder die Bitfehlerrate oder die Signalstärke.

3. Verfahren nach Anspruch 1, wobei der Zuverlässigkeitskoeffizient (207) ein Wahrscheinlichkeitswert dafür ist, dass der in der entsprechenden Zelle gespeicherte entsprechende Vergleichswert, der mindestens eine Signaleigenschaft bezeichnet, richtig ist.

4. Verfahren nach Anspruch 1, wobei der Vergleichswert, der mindestens eine Signaleigenschaft bezeichnet, abhängig ist von einer Richtung, aus welcher der Eintritt in die jeweilige Zelle der Karte erfolgt.

5. Verfahren nach Anspruch 1, wobei der Anpassungsschritt einen Schwellenwert berücksichtigt, der als ein Anpassungsfilter fungiert.

6. Verfahren nach Anspruch 1, wobei der initiale Zuverlässigkeitskoeffizient ein fester Wert ist oder abhängig ist von der gemessenen Signalstärke, die an das Mobilgerät (100) zurückgemeldet wird.

7. Computerprogramm, das Programmcodemittel umfasst, zur Ausführung aller Schritte des computerimplementierten Verfahrens nach Anspruch 1, wenn das Programm auf einem Computer ausgeführt wird.

8. Computerlesbares Medium, das durch einen Computer ausführbare Anweisungen speichert, die alle Schritte des computerimplementierten Verfahrens nach Anspruch 1 ausführen, wenn sie auf einem Computer ausgeführt werden.

9. Vorrichtung zur Vorhersage der Antennensendeleistung in einem drahtlosen Kommunikationssystem, wobei die Vorrichtung folgendes umfasst:
• eine Antenne (106);
• eine Standorterkennungsvorrichtung (107);
• einen Speicher, der zum Speichern einer oder mehrerer Signaleigenschaftskarten gestaltet ist;
• eine Steuereinheit, die zur Ausführung der Schritte des Verfahrens nach Anspruch 1 gestaltet ist.

## Revendications

1. Procédé de prédiction d'une puissance d'émission d'antenne dans un système de communication sans fil, le procédé comprenant les étapes consistant à
• obtenir (601) une carte de propriétés de signal par un dispositif mobile (100), la carte étant prédéfinie en référence à un dispositif source (110), la carte comprenant, pour chaque cellule (202, 203), une valeur comparable indiquant au moins une propriété de signal et une valeur comparable indiquant un coefficient de fiabilité (207) couplé à chaque propriété de signal correspondante ;
• détecter (602) un mouvement du dispositif mobile (100) en référence à ladite carte et à un emplacement de source et de destination associé ;
• ajuster (603) la puissance d'émission d'antenne du dispositif mobile (100), sur la base d'une lecture, à partir de la carte de propriétés de signal, du coefficient de fiabilité associé et des propriétés de signal pour la destination ;
• vérifier (604) l'ajustement sur la base de la lecture réelle de la propriété de signal et, à la suite de ladite vérification, ajuster ledit coefficient de fiabilité relatif à une cellule (202, 203) correspondant à ladite destination sur ladite carte de propriétés de signal.

2. Procédé selon la revendication 1, ladite valeur comparable désignant au moins une propriété de signal étant une Indication d'intensité de signal reçu ou un taux d'erreur sur les bits et/ou une intensité de signal.

3. Procédé selon la revendication 1, ledit coefficient de fiabilité (207) étant une valeur de probabilité que la valeur comparable respective, indiquant au moins une propriété de signal, stockée dans la cellule respective, soit correcte.

4. Procédé selon la revendication 1, ladite valeur comparable désignant au moins une propriété de signal dépendant d'une direction, à partir de laquelle la cellule particulière de ladite carte est entrée.

5. Procédé selon la revendication 1 ladite étape d'ajustement prenant en compte un seuil fonctionnant comme un filtre d'ajustements.

6. Procédé selon la revendication 1, le coefficient de fiabilité initial étant une valeur fixe ou dépendant de l'intensité mesurée de signal renvoyé au dispositif mobile (100).

7. Programme informatique comprenant un moyen de code de programme pour exécuter toutes les étapes du procédé mis en œuvre par ordinateur selon la revendication 1 lorsque ledit programme est exécuté sur un ordinateur.

8. Support lisible par ordinateur sur lequel sont mémorisées des instructions exécutables par ordinateur exécutant toutes les étapes du procédé mis en œuvre par ordinateur selon la revendication 1 lorsqu'elles sont exécutées sur un ordinateur.

9. Appareil de prédiction d'une puissance d'émission d'antenne dans un système de communication sans fil, ledit appareil comprenant :
• une première antenne (106) ;
• un moyen de détection de localisation (107) ;
• une mémoire conçue pour stocker au moins une carte de propriétés de signal ;
• un dispositif de commande conçu pour exécuter les étapes du procédé selon la revendication 1.
